# EUROPEAN PATENT APPLICATION

(11) **EP 2 902 673 A1**
(43) Date of publication of application: **05.08.2015**
(21) Application number: 13841535.1
(22) Date of filing: 24.09.2013
(51) Int. Cl.: F16H 61/22, F16H 63/34

(54) **AUTOMATIC TRANSMISSION AND CONTROL METHOD THEREFOR**

(30) Priority: 26.09.2012 JP 2012212552
(71) Applicant: Jatco Ltd, Fuji-shi, Shizuoka 417-8585 (JP)
(72) Inventor: NAKANO, Yusuke, Fuji-shi Shizuoka 417-8585 (JP); KOBAYASHI, Katsuya, Fuji-shi Shizuoka 417-8585 (JP)
(74) Representative: Hoefer & Partner Patentanwälte mbB
(86) International application number: PCT/JP2013/075675
(87) International publication number: WO 2014/050803

(57) **Abstract**

A control unit performs a engaging control, which supplies an ON pressure to a engaging-side oil chamber to set a lock mechanism to a locked state and then decreases the hydraulic pressure of the engaging-side oil chamber, when a running mode is selected, and performs a releasing control, which supplies an OFF pressure to a release-side oil chamber to set the lock mechanism to an unlocked state and then decreases the hydraulic pressure of the release-side oil chamber, when a non-running mode is selected. In the case where the control unit determines to control the friction element in the engaged state to become the released state, the control unit starts supplying the OFF pressure to the release-side oil chamber to cause the unlocked state of the lock mechanism, and starts supplying the hydraulic pressure to the engaging-side oil chamber and reduces the hydraulic pressure of the release-side oil chamber.

## Description

### TECHNICAL FIELD

The present invention relates to a control for an automatic transmission that comprises a friction element with a lock mechanism.

### BACKGROUND ART

As a clutch brake of an automatic transmission, a friction element operating with hydraulic pressure is used to couple two members (in the case of a clutch, both are rotational elements, and in the case of a brake, one is a rotational element and the other is a non-rotational element) coaxially arranged.

For this friction element, in JP07-12221A, a plurality of friction plates are mounted on the respective two members to be axially slidable, and the friction plates for the two members are alternately arranged. When the friction plates for the two members are pressed against each other by a hydraulic piston, the two members are coupled to each other via the friction plates.

### SUMMARY OF INVENTION

In JP07-12221A, to maintain the engaged state, it is necessary to cause the hydraulic pressure to constantly act on the hydraulic piston. Therefore, it is necessary to cause the hydraulic pump to constantly act, and there is a problem that deteriorates the fuel efficiency of the vehicle on which the automatic transmission is mounted.

There is a possibility of performing a neutral control, which causes a released state of the friction element to release the engaged state between the engine and the transmission, so as to reduce the load on the engine and improve the fuel efficiency. In this case, it is necessary to perform control for causing the state just prior to the friction element is engaged in preparation for the subsequent acceleration request. Inappropriate execution of this control might cause a time lag during reacceleration so as to cause uncomfortable feeling to the driver.

The present invention has been made in view of the above-described problems, and it is an object of the present invention to provide an automatic transmission that improves the energy efficiency and prevents the driver from feeling uncomfortable.

According to one aspect of the present invention, an automatic transmission comprises a friction element, a select switch, and a control unit. The friction element is arranged in a power transmission path. The friction element is engaged by supply of an ON pressure to a engaging-side oil chamber while a lock mechanism becomes a locked state. The friction element maintains the engaged state when the lock mechanism becomes the locked state if the hydraulic pressure of the engaging-side oil chamber decreases. The friction element becomes a released state by supply of an OFF pressure to a release-side oil chamber when the lock mechanism is in the locked state while the lock mechanism becomes an unlocked state. The friction element maintains the released state when the lock mechanism becomes the unlocked state if the hydraulic pressure of the release-side oil chamber decreases. The select switch allows selecting a running mode or a non-running mode as a transmission mode. The control unit configured to: perform a engaging control when the running mode is selected by the select switch; and perform a releasing control when the non-running mode is selected by the select switch. The engaging control supplies the ON pressure to the engaging-side oil chamber so as to set the lock mechanism to the locked state and then decreases the hydraulic pressure of the engaging-side oil chamber. The releasing control supplies the OFF pressure to the release-side oil chamber so as to set the lock mechanism to the unlocked state and then decreases the hydraulic pressure of the release-side oil chamber. In a case where the control unit determines to control the friction element to become the released state when the running mode is selected, the control unit starts supplying the OFF pressure to the release-side oil chamber to cause the unlocked state of the lock mechanism. After the lock mechanism becomes the unlocked state, the control unit starts supplying the hydraulic pressure to the engaging-side oil chamber and reduces the hydraulic pressure of the release-side oil chamber.

According to another aspect of the present invention, a control method is for an automatic transmission. The automatic transmission includes a friction element and a select switch. The friction element is arranged in a power transmission path. The friction element is engaged by supply of an ON pressure to a engaging-side oil chamber while a lock mechanism becomes a locked state. The friction element maintains the engaged state when the lock mechanism becomes the locked state if the hydraulic pressure of the engaging-side oil chamber decreases. The friction element becomes a released state by supply of an OFF pressure to a release-side oil chamber when the lock mechanism is in the locked state while the lock mechanism becomes an unlocked state. The friction element maintains the released state when the lock mechanism becomes the unlocked state if the hydraulic pressure of the release-side oil chamber decreases. The select switch allows selecting a running mode or a non-running mode as a transmission mode. The control method comprises: performing a engaging control when the running mode is selected by the select switch; and performing a releasing control when the non-running mode is selected by the select switch. The engaging control supplies the ON pressure to the engaging-side oil chamber so as to set the lock mechanism to the locked state and then decreases the hydraulic pressure of the engaging-side oil chamber. The releasing control supplies the OFF pressure to the release-side oil chamber so as to set the lock mechanism to the unlocked state and then decreases the hydraulic pressure of the release-side oil chamber. In a case where the control method determines to control the friction element to become the released state when the running mode is selected, the control method starts supplying the OFF pressure to the release-side oil chamber to cause the unlocked state of the lock mechanism. After the lock mechanism becomes the unlocked state, the control method starts supplying the hydraulic pressure to the engaging-side oil chamber and reduces the hydraulic pressure of the release-side oil chamber.

According to the aspect described above, the lock mechanism BL is set to the locked state in the engaged state by supply of the ON pressure and the locked state is maintained after removal of the ON pressure. The lock mechanism BL is set to the unlocked state by supply of the OFF pressure. Accordingly, the released state can be maintained without causing a constant action of the hydraulic pressure. When the friction element is controlled to be the released state while the running mode is selected, the OFF pressure is supplied to the release-side oil chamber so as to cause the unlocked state of the lock mechanism. Then, supply of the hydraulic pressure to the engaging-side oil chamber is started. This configuration allows keeping the state just prior to the engaged state by the hydraulic pressure while causing the unlocked state of the lock mechanism. Accordingly, when the driver requests acceleration request or restart afterward, it is possible to immediately cause the engaged state of the friction element. This prevents occurrence of a time lag due to engaging, so as to prevent the driver from feeling uncomfortable.

### BRIEF DESCRIPTION OF DRAWINGS

FIG. 1 is a schematic configuration diagram of a vehicle that comprises an automatic transmission according to an embodiment of the present invention.
FIG. 2 is a cross-sectional view of a forward clutch according to the embodiment of the present invention and a clutch operation pack that causes this forward clutch to operate.
FIG. 3 is a flowchart of an N control executed by a transmission controller according to the embodiment of the present invention.
FIG. 4 is a timing chart of the N control according to the embodiment of the present invention.

### DESCRIPTION OF EMBODIMENTS

The following describes an embodiment of the present invention by referring to the attached drawings.

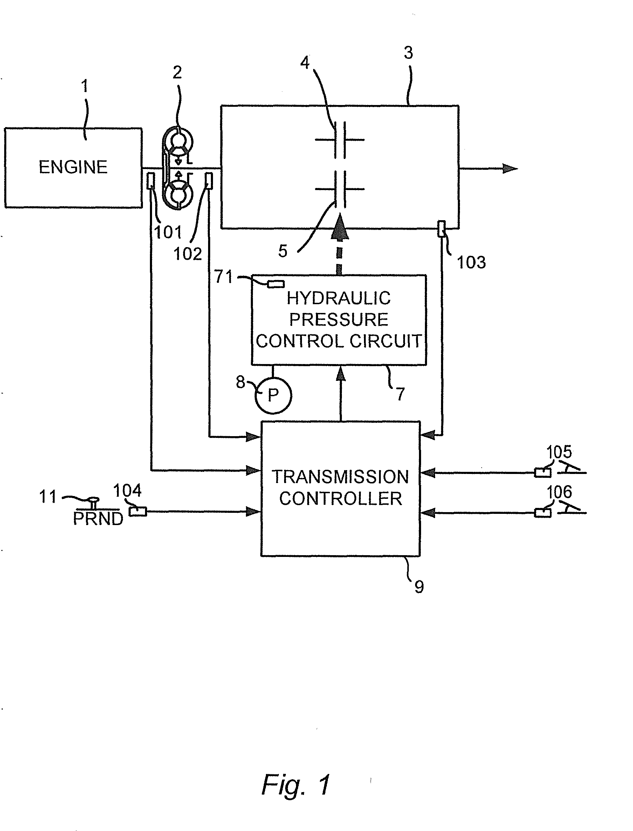

FIG. 1 illustrates the schematic configuration of a vehicle that comprises an automatic transmission according to the embodiment of the present invention. The vehicle comprises an engine 1, a torque converter 2, and a transmission 3. The output rotation of the engine 1 is transmitted to a drive wheel, which is not illustrated, via the torque converter 2, the transmission 3, and a differential gear unit, which is not illustrated.

The transmission 3 is a stepped or stepless automatic transmission. The transmission 3 comprises a reverse brake 4 and a forward clutch 5. The transmission 3 outputs reversed rotation of the engine 1 in a state where the reverse brake 4 is engaged, and outputs the rotation of the engine 1 while maintaining the rotation direction in a state where the forward clutch 5 is engaged.

The reverse brake 4 is a conventional friction element that is engaged by supply of a engaging pressure and requires a continuous supply of the engaging pressure to maintain the engaged state. It is only necessary to stop the supply of the engaging pressure to release the reverse brake 4.

The forward clutch 5 is a friction element that comprises a lock mechanism BL as described below. When the ON pressure is supplied to the forward clutch 5 and then the lock mechanism BL becomes the locked state, the forward clutch 5 can be maintained in the engaged state even if the supply of the ON pressure is stopped. To release the forward clutch 5, it is only necessary to supply the OFF pressure to the forward clutch 5 to cause the released state of the lock mechanism BL. Once the lock mechanism BL becomes the released state, the forward clutch 5 can be maintained in the released state even if the supply of the OFF pressure is stopped. The configuration of the forward clutch 5 will be described in detail later.

When both the reverse brake 4 and the forward clutch 5 are simultaneously engaged, the transmission 3 becomes what is called an interlock state where the output shaft cannot rotate. Accordingly, these are selectively engaged.

A hydraulic pressure control circuit 7 comprises: a regulator valve, which regulates the hydraulic pressure from a hydraulic pump 8 driven by the engine 1 to the line pressure; a solenoid valve, which regulates the hydraulic pressure supplied to the friction elements (and the configuration member of the continuously variable transmission mechanism in the case where the transmission 3 is a continuously variable transmission) including the forward clutch 5 assuming that the line pressure is the source pressure; the hydraulic pump 8; and an oil passage, which couples between the respective valves and the respective friction elements.

The respective valves of the hydraulic pressure control circuit 7 are controlled based on the control signal from a transmission controller 9. The transmission controller 9 is constituted of a CPU, a ROM, a RAM, input/output interfaces, and similar member. The transmission controller 9 determines the running state of the vehicle based on various signals input from various sensors and the engine controller, and outputs a command to the hydraulic pressure control circuit 7 to realize the transmission gear (the gear ratio in the case where the transmission 3 is a continuously variable transmission) appropriate for the running state. The hydraulic pressure control circuit 7 supplies the hydraulic pressure for controlling the respective engaged states of the forward clutch 5 and the reverse brake 4. The actual hydraulic pressure to be supplied is detected by an actual hydraulic pressure sensor 71, and the transmission controller 9 performs feedback control using a target hydraulic pressure (for example, the ON pressure and the OFF pressure described later) such that the actual hydraulic pressure becomes the target hydraulic pressure.

The transmission controller 9 receives inputs of the signals or similar input from: a rotational speed sensor 101, which detects a rotation speed Ne of the engine 1; a rotational speed sensor 102, which detects a turbine rotation speed Nt (the input rotation speed of the transmission 3) of the torque converter 2; an oil temperature sensor 103, which detects an oil temperature TMP of the transmission 3; an inhibitor switch 104, which detects the position of a select lever 11; an accelerator position sensor 105, which detects the manipulated variable (hereinafter referred to as "accelerator position APO") of the accelerator pedal; a brake switch 106 that detects ON/OF F of the brake; and similar member.

The select lever 11 is arranged at gates, which couple between a parking range (hereinafter referred to as "P range"), a reverse range (hereinafter referred to as "R range"), a neutral range (hereinafter referred to as "N range"), and a drive range (hereinafter referred to as "D range"). The select lever 11 is constituted to be movable between respective gates.

The transmission controller 9 engages or releases each of the forward clutch 5 and the reverse brake 4 corresponding to the position of the select lever 11. Specifically, in the D range, the forward clutch 5 is engaged and the reverse brake 4 is released. In the R range, the forward clutch 5 is released and the reverse brake 4 is engaged. In the P range and the N range, the forward clutch 5 and the reverse brake 4 are released.

Next, a description will be given of the detailed configuration of the forward clutch 5.

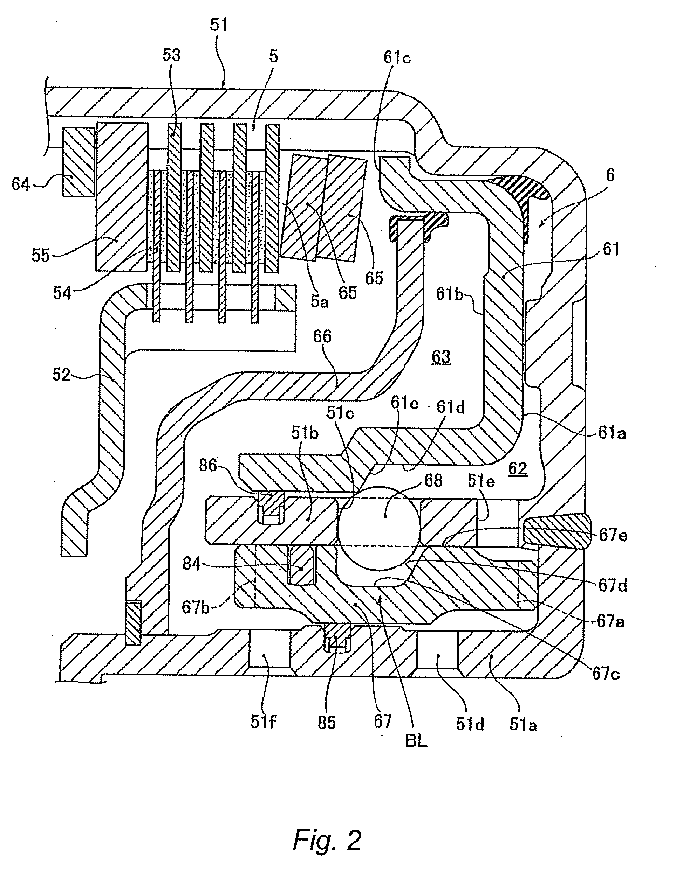

FIG. 2 illustrates cross sections of the forward clutch 5 according to the embodiment of the present invention and a clutch operation pack 6, which causes this forward clutch 5 to operate. The following describes the respective configurations.

The forward clutch 5 comprises a clutch drum 51, a clutch hub 52, a driven plate 53, a drive plate 54, and a retainer plate 55.

The clutch drum 51 and the clutch hub 52 are coaxially arranged. The clutch drum 51 couples to a rotational element (a shaft, a gear, or similar element), which is not illustrated. The clutch hub 52 couples to another rotational element (a shaft, a gear, or similar element), which is not illustrated.

The driven plate 53 is mounted on the clutch drum 51 by spline coupling to be axially slidable. The drive plate 54 is mounted on the clutch hub 52 by spline coupling to be axially slidable. Four driven plates 53 and four drive plates 54 are alternately arranged, and clutch facings are attached to the friction surfaces on both sides of the drive plate 54.

The clutch drum 51 transmits the rotation input from the rotational element coupled to the clutch drum 51 via the driven plate 53 and the drive plate 54 to the clutch hub 52.

The retainer plate 55 intervenes between: the drive plate 54 arranged in the end portion at the opposite side to a hydraulic piston 61; and a snap ring 64 secured to the groove at the inner periphery of the clutch drum 51. The retainer plate 55 has a friction surface on one surface. The retainer plate 55 has a thicker thickness in the axial direction than that of the driven plate 53, and prevents the driven plate 53 and the drive plate 54 from falling over.

The clutch operation pack 6 comprises the hydraulic piston 61, an ON-pressure piston chamber 62, an OFF-pressure piston chamber 63, the snap ring 64, a diaphragm spring 65, a partition plate 66, and the lock mechanism BL.

The hydraulic piston 61 is arranged to be axially movable with respect to the forward clutch 5. The hydraulic piston 61 has an ON-pressure receiving surface 61a on one surface and an OFF-pressure receiving surface 61b on the other surface.

The ON-pressure piston chamber 62 is defined between the clutch drum 51 and the hydraulic piston 61 such that the ON pressure acts on the ON-pressure receiving surface 61a of the hydraulic piston 61.

The OFF-pressure piston chamber 63 is defined between the partition plate 66 secured to the clutch drum 51 and the hydraulic piston 61 such that the OFF pressure acts on the OFF-pressure receiving surface 61b of the hydraulic piston 61.

The snap ring 64 is arranged in the position at the opposite side to the hydraulic piston 61 across the forward clutch 5, and axially supports the forward clutch 5.

The diaphragm spring 65 intervenes between a clutch-side end surface 61 c of the hydraulic piston 61 and a piston-side end surface 5a of the forward clutch 5. The diaphragm spring 65 is arranged in pairs stacked in the axis direction, and causes the engaging force to act on the forward clutch 5 when the hydraulic piston 61 is moved in the engaging direction toward the snap ring 64.

The lock mechanism BL is incorporated in the clutch drum 51, and is constituted of the hydraulic piston 61, a ball holding piston 67, and a ball 68.

The hydraulic piston 61 is arranged to be axially movable with respect to the forward clutch 5. At the hydraulic piston 61, a housing space 61d and a tapered surface 61e are disposed. The housing space 61d houses the ball 68 when the movement of the hydraulic piston 61 in the releasing direction is restricted. The tapered surface 61e is formed continuously with the housing space 61d. When the hydraulic piston 61 has a stroke in the releasing direction, the ball 68 is pressed inward.

The ball holding piston 67 is arranged in a cylindrical space defined between: an inner peripheral cylinder portion 51a of the clutch drum 51 covering the hydraulic piston 61; and a partition cylindrical wall portion 51b, which axially projects from the clutch drum 51. When the ON pressure or the OFF pressure acts, the ball holding piston 67 moves in the axial direction. The space between the outer peripheral surface of the ball holding piston 67 and the partition cylindrical wall portion 51b is sealed by a sealing ring 84. The space between the inner peripheral surface of the ball holding piston 67 and the inner peripheral cylinder portion 51a is sealed by a sealing ring 85. The space between the inner peripheral surface of the hydraulic piston 61 and the partition cylindrical wall portion 51b is sealed by a sealing ring 86. Accordingly, on both sides of this hydraulic piston 61, the ON-pressure piston chamber 62 and the OFF-pressure piston chamber 63 are defined.

An ON-pressure port 51d, which is opened at the clutch drum 51, and the ON-pressure piston chamber 62 communicate with each other via an ON-pressure communication groove 67a, which is formed in the ball holding piston 67, and an ON-pressure communication hole 51e, which is opened at the partition cylindrical wall portion 51b. An OFF-pressure port 51f, which is opened at the clutch drum 51, and the OFF-pressure piston chamber 63 communicate with each other via an OFF-pressure communication groove 67b, which is formed in the ball holding piston 67, and an OFF-pressure communication clearance, which is secured between the end portion of the partition cylindrical wall portion 51b and the partition plate 66.

In the ball holding piston 67, a housing space 67c, a tapered surface 67d, and a lock surface 67e are disposed. The housing space 67c houses the ball 68 when the movement of the hydraulic piston 61 in the releasing direction is allowed. The tapered surface 67d and the lock surface 67e are formed continuously with the housing space 67c. When the ball holding piston 67 has a stroke in the direction toward the forward clutch 5, the tapered surface 67d extrudes the ball 68 outward. The lock surface 67e locks the extruded ball 68 to that position.

The ball 68 is disposed at a ball hole 51c, which is opened in the partition cylindrical wall portion 51b. The ball 68 receives the forces from these tapered surfaces 61e and 67d of the pistons 61 and 67 in association with the movement of the hydraulic piston 61 and the ball holding piston 67 in the axial direction due to the action of the ON pressure or the OFF pressure, so as to move in the radial direction between a lock position and a lock release position.

With the configuration described above, when the ON pressure is caused to act on the ON-pressure piston chamber 62, the hydraulic piston 61 moves in the engaging direction approaching the forward clutch 5. Then, the forward clutch 5 becomes the engaged state due to the engaging force by the diaphragm spring 65. When the hydraulic piston 61 moves in the engaging direction, the centrifugal force and the hydraulic pressure due to the rotation move the ball 68 in the radially outward direction so as to house the ball 68 in the housing space 61d. In association with the action of the ON pressure on the ball holding piston 67, the ball holding piston 67 moves in the axial direction (the direction toward the forward clutch 5). Then, the lock surface 67e holds the ball 68 held in the housing space 67c.

This causes the locked state of the lock mechanism BL so as to restrict the movement of the hydraulic piston 61 in the releasing direction. Accordingly, the engaged state of the forward clutch 5 is maintained even when the ON pressure is drained. The ON pressure is supplied to the ON-pressure piston chamber 62 only during the engaging operation. There is no need to supply the ON pressure for maintaining the engaged state of the forward clutch 5.

When the OFF pressure is caused to act on the OFF-pressure piston chamber 63, the ball holding piston 67 moves in the axial direction (the direction separated from the forward clutch 5) from the holding position of the ball 68 by the lock surface 67e to the holding release position. The force as the sum of the force by the OFF pressure and the reactive force of the engaging force by the diaphragm spring 65 acts on the hydraulic piston 61 to have a stroke in the direction in which the hydraulic piston 61 returns, and presses the ball 68 back in the lock releasing direction. When the ball 68 moves up to the lock release position, the lock mechanism BL becomes the released state.

When the forward clutch 5 is released, the ON pressure is zero. This maintains the state where the ball 68 is housed in the housing space 67c of the ball holding piston 67 even when the OFF pressure is drained. The OFF pressure is supplied to the OFF-pressure piston chamber 63 only during the releasing operation. There is no need to supply the OFF pressure for maintaining the released state of the forward clutch 5.

According to the vehicle that comprises the automatic transmission thus configured, next, the N control will be described.

For example, in the case where the vehicle is at low speed and in a non-accelerating state (in a coasting state), the following control (coasting N control) is usually performed. This control causes a released state of the forward clutch 5 to release the coupling between the engine 1 and the transmission 3, so as to reduce the load (inertia) on the engine 1 at the output side and improves the fuel efficiency.

When the vehicle is stopped while being maintained in a running mode (for example, the D range), the latter part of the transmission 3 is in a rotation stopped state. Accordingly, the idle rotation of the engine 1 is cut off by the torque converter 2. Since the torque converter 2 is filled with operation oil, the operation oil causes friction so as to consume the difference of rotation as heat. To reduce this energy consumption, the following control (idling N control) is usually performed. This N control releases the forward clutch 5 of the transmission 3 to completely cut off the rotation between the engine 1 side and the latter part side of the transmission 3 and reduce the friction due to the rotation to reduce the vibration in the engine 1 and similar member, so as to improve the fuel efficiency.

To improve the energy efficiency, the coasting N control, which causes the released state of the forward clutch 5 in the state where the vehicle is running, and the idling N control, which causes the released state of the forward clutch 5 in the state where the vehicle is stopped, are performed. In this embodiment, these coasting N control and idling N control, which perform control to cause the released state of the forward clutch 5 so as to cause the neutral state of the transmission 3, are denoted only as "N control" below.

Now, in the case where the forward clutch 5 is caused to be in the released state during operation of the engine 1, when the driver requests the subsequent acceleration or restart, it is necessary to immediately control the forward clutch 5 to be in the engaged state. At this time, delay in engaging the forward clutch 5 causes a time lag from the acceleration request of the driver until the start of acceleration by the vehicle. This might cause uncomfortable feeling to the driver.

Therefore, in the embodiment of the present invention, the following control is used for controlling the engaged state of the forward clutch 5.

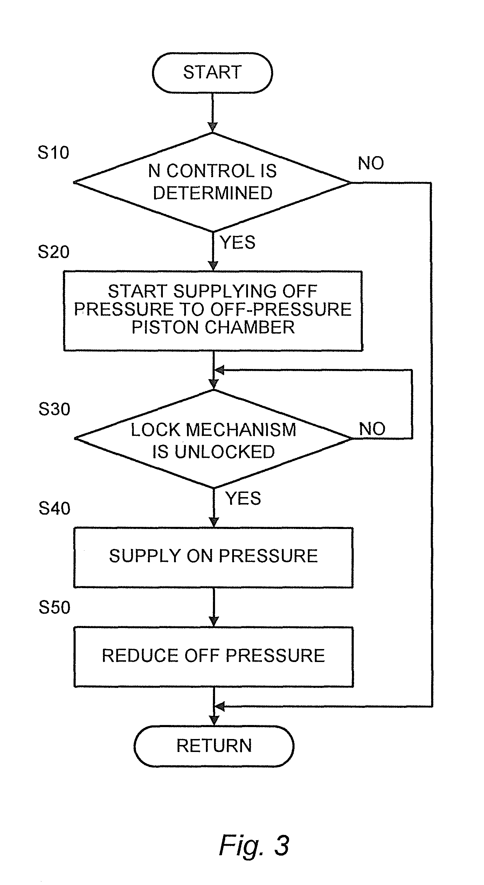

FIG. 3 is a flowchart of the N control executed by the transmission controller 9 according to the embodiment of the present invention. The N control in this embodiment includes, described above, the coasting N control, which causes the released state of the forward clutch 5 in the state where the vehicle is running, and the idling N control, which causes the released state of the forward clutch 5 in the state where the vehicle is stopped.

The flowchart illustrated in FIG. 3 is executed in a predetermined cycle (for example, 10 ms) in the transmission controller 9.

In step S10, the transmission controller 9 determines whether or not to execute the N control. For example, the execution of the N control is determined based on the conditions such as the engaged state of the forward clutch 5 in the running mode, a vehicle speed of a predetermined vehicle speed (for example, 10 km/h) or less or corresponding to the vehicle stopped state, an accelerator position APO of zero (0/8), and depression of the brake pedal. In the case where it is determined that the N control is not executed, the process according to this flowchart is terminated and the process returns to another process.

In the case where it is determined that the N control is executed, the process proceeds to step S20. Then, the transmission controller 9 starts the supply of the OFF pressure to the OFF-pressure piston chamber 63 of the clutch operation pack 6 for the forward clutch 5.

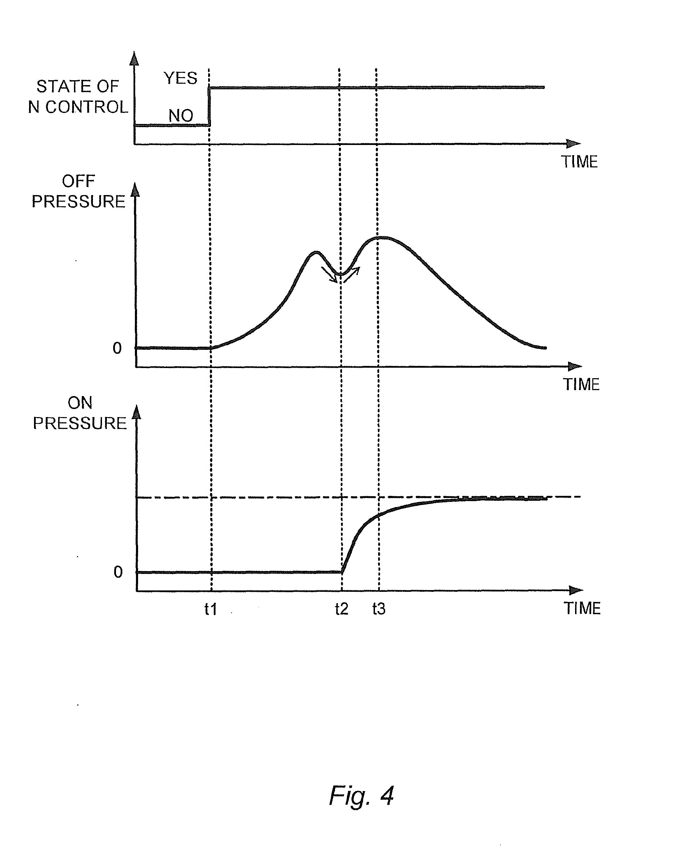

Subsequently, in step S30, the transmission controller 9 determines whether or not the lock mechanism BL becomes the unlocked state by supply of the OFF pressure. Whether or not the lock mechanism BL becomes the unlocked state is determined, as described later in FIG. 4, by a change in actual hydraulic pressure supplied to the OFF-pressure piston chamber 63 by the hydraulic pressure control circuit 7.

In the case where the lock mechanism BL is not in the released state, the process returns to step S30 and repeats the processing there.

In the case where it is determined that the lock mechanism BL becomes the released state, the process proceeds to step S40. Then, the transmission controller 9 starts supplying the hydraulic pressure to the ON-pressure piston chamber 62 of the clutch operation pack 6 for the forward clutch 5. Subsequently, the process proceeds to step S50, and the transmission controller 9 reduces the hydraulic pressure of the OFF-pressure piston chamber 63 of the clutch operation pack 6 for the forward clutch 5. Subsequently, the process according to this flowchart is terminated and the process returns to another process.

In step S40, the upper limit of the hydraulic pressure supplied to the ON-pressure piston chamber 62 is set to the minimum hydraulic pressure at which the lock mechanism BL does not become the locked state. In the case where the lock mechanism BL becomes the unlocked state in the determination in step S30, the hydraulic piston 61 is moved to not the release side but the engaging side in preparation for the subsequent acceleration or restart request by the driver.

At this time, the above-described upper limit of the hydraulic pressure maintains the state where the forward clutch 5 does not have the torque transmission capacity but the hydraulic piston 61 is moved to the engaging side (piston touching state). In the case where the driver requests acceleration or restart afterward, the transmission controller 9 further increases the hydraulic pressure of the ON-pressure piston chamber 62 from the above-described upper limit of the hydraulic pressure. This causes the hydraulic piston 61 to press the driven plate 53 and the drive plate 54 via the diaphragm spring 65 such that the forward clutch 5 has the torque transmission capacity.

As described above, execution of the N control according to the flowchart illustrated in FIG. 3 causes a cutoff between the engine 1 and the transmission 3 so as to reduce the load on the engine 1 and improves the fuel efficiency of the engine 1.

FIG. 4 illustrates a timing chart of the N control according to the embodiment of the present invention.

In FIG. 4, from the top line, the determination state of the N control, the actual hydraulic pressure of the OFF-pressure piston chamber 63, and the actual hydraulic pressure of the ON-pressure piston chamber 62 are illustrated as respective timing charts where the horizontal axis denotes time.

When the transmission controller 9 determines to execute the N control, the transmission controller 9 starts supplying the OFF pressure to the OFF-pressure piston chamber 63 (at timing t1).

When the supply of the OFF pressure is started, the actual hydraulic pressure of the OFF-pressure piston chamber 63 gradually increases. When the hydraulic pressure of the OFF-pressure piston chamber 63 increases to a certain level, the ball holding piston 67 starts axially moving from the holding position toward the holding release position.

At this time, the movement of the ball holding piston 67 causes expansion of the volume of the OFF-pressure piston chamber 63. Accordingly, the actual hydraulic pressure of the OFF-pressure piston chamber 63 is once reduced. When the ball holding piston 67 stops moving after reaching the holding release position, a change in volume of the OFF-pressure piston chamber 63 does not occur. Accordingly, the hydraulic pressure of the OFF-pressure piston chamber 63 increases again.

That is, when the ball holding piston 67 starts moving from the holding position to the holding release position, the actual hydraulic pressure decreases. When the ball holding piston 67 stops at the holding release position, the actual hydraulic pressure increases. Accordingly, the holding release position of the ball holding piston 67 can be detected by a change in actual hydraulic pressure of the OFF-pressure piston chamber 63.

In FIG. 4, the actual hydraulic pressure of the OFF-pressure piston chamber 63 changes from a decreasing trend to an increasing trend at timing t2. This shows that the ball holding piston 67 stops after moving up to the holding release position, and shows that the lock mechanism BL is released.

Accordingly, the transmission controller 9 determines that the lock mechanism BL becomes the unlocked state at the time when the actual hydraulic pressure of the OFF-pressure piston chamber 63 changes from a decreasing trend to an increasing trend.

When it is determined that the lock mechanism BL becomes the unlocked state (at timing t2), the transmission controller 9 starts supplying the hydraulic pressure to the ON-pressure piston chamber 62. At this time, the upper limit of the hydraulic pressure is set to, as described above, the hydraulic pressure at which the lock mechanism BL does not become the locked state (illustrated by one dot chain line). After the start of supplying the hydraulic pressure to the ON-pressure piston chamber 62, the OFF pressure supplied to the OFF-pressure piston chamber 63 is reduced (at timing t3).

When the lock mechanism BL becomes the unlocked state (at timing t2), the hydraulic piston 61 is still in the state after being moved to the engaging side. Afterward, additional supply of the OFF pressure causes the hydraulic piston 61 to move to the release side position. However, in this embodiment, a hydraulic pressure is supplied to the ON-pressure piston chamber 62 to keep the hydraulic piston 61 in the engaging side position. This hydraulic pressure maintains the hydraulic piston 61 in the state in contact with the diaphragm spring 65 (piston touching state). In this state, the forward clutch 5 does not have the torque transmission capacity yet.

Afterward, an increase in hydraulic pressure to the ON-pressure piston chamber 62 causes the hydraulic piston 61 to press the diaphragm spring 65 such that the forward clutch 5 has the torque transmission capacity.

With this control, the determination that the N control is executed causes controlling the lock mechanism BL to be in the unlocked state and supplies a hydraulic pressure to the ON-pressure piston chamber 62, so as to prepare for the subsequent acceleration or restart.

In the embodiment of the present invention configured as described above, the transmission 3 comprises the forward clutch 5. The forward clutch 5 becomes the engaged state and sets the locked state of the lock mechanism BL by supply of the ON pressure. The forward clutch 5 maintains the locked state after removal of the ON pressure. The forward clutch 5 becomes the released state and sets the unlocked state of the lock mechanism BL by supply of the OFF pressure. The forward clutch 5 maintains the unlocked state after removal the OFF pressure. When the transmission controller 9 determines to execute the N control, which controls the forward clutch 5 in the engaged state to become the released state, the transmission controller 9 starts supplying the OFF pressure to the OFF-pressure piston chamber 63 such that the lock mechanism BL becomes the unlocked state so as to start supplying a hydraulic pressure to the ON-pressure piston chamber 62, and reduces the hydraulic pressure of the OFF-pressure piston chamber 63.

With this configuration, it is determined whether the N control is performed when the vehicle is in the coasting state or the stopped state. When the forward clutch 5 is controlled from the engaged state to the released state, the lock mechanism is set to the unlocked state and then the supply of the hydraulic pressure to the ON-pressure piston chamber 62 is started. This control allows keeping the state just prior to the engaged state by the hydraulic pressure to the ON-pressure piston chamber 62 while causing the unlocked state of the lock mechanism BL of the forward clutch 5. Accordingly, when the driver requests acceleration request or restart afterward, it is possible to immediately cause the engaged state of the forward clutch 5. This prevents occurrence of a time lag due to engaging of the forward clutch 5, so as to prevent the driver from feeling uncomfortable.

Particularly, for the conventional friction element having the structure where an increase in hydraulic pressure causes engaging and a discharge of hydraulic pressure causes release by the biasing force of the return spring, to maintain the piston touching state as described above while discharging the hydraulic pressure from the engaged state, it is necessary to perform feedback control or similar control using the difference of rotation, the hydraulic pressure, and similar parameter of the friction element so as to learn the piston position causing the piston touching state. In the embodiment of the present invention, the return spring is not provided, and the hydraulic piston 61 moves to the initial engagement position only by supplying a slight hydraulic pressure to the ON-pressure piston chamber 62 after the OFF pressure is reduced. Accordingly, without learning the piston position, the piston touching position can be secured only by supplying the hydraulic pressure to the extent that does not deform the diaphragm spring 65.

The transmission controller 9 reliably detects that the lock mechanism BL becomes the unlocked state based on a change in actual hydraulic pressure of the OFF-pressure piston chamber 63, more specifically, at the time when the actual hydraulic pressure changes from a decreasing trend to an increasing trend. This allows starting supply of the hydraulic pressure to the ON-pressure piston chamber 62 in a timely manner.

After the lock mechanism BL becomes the unlocked state, when the driver requests acceleration or restart, the transmission controller 9 increases the hydraulic pressure by the hydraulic pressure to the ON-pressure piston chamber 62. This immediately allows the forward clutch 5 to have the torque transmission capacity as the engaged state, so as to prevent occurrence of a time lag.

The embodiments of the present invention described above are merely one illustration of some application examples of the present invention and not of the nature to limit the technical scope of the present invention to the specific constructions of the above embodiments.

While in the embodiment of the present invention, the description is given of the example that comprises the engine 1 that is an internal combustion engine as the driving force source, this should not be construed in a limiting sense. The present invention is similarly applicable to a hybrid vehicle that comprises an engine and an electric motor as driving force sources.

This application claims priority to Japanese Patent Application No. 2012-212552 filed with the Japan Patent Office on September 26, 2012, the entire contents of which are incorporated herein by reference.

## Claims

1. An automatic transmission comprising:
a friction element that is arranged in a power transmission path, and that is adapted to:
become a engaged state by supply of an ON pressure to a engaging-side oil chamber while a lock mechanism becomes a locked state, and maintain the engaged state when the lock mechanism becomes the locked state when the hydraulic pressure of the engaging-side oil chamber decreases; and
become a released state by supply of an OFF pressure to a release-side oil chamber when the lock mechanism is in the locked state while the lock mechanism becomes an unlocked state, and maintain the released state when the lock mechanism becomes the unlocked state when the hydraulic pressure of the release-side oil chamber decreases;
a select switch adapted to allow selecting a running mode or a non-running mode as a transmission mode; and
a control unit adapted to:
perform a engaging control when the running mode is selected by the select switch, the engaging control supplying the ON pressure to the engaging-side oil chamber so as to set the lock mechanism to the locked state and then decreasing the hydraulic pressure of the engaging-side oil chamber; and
perform a releasing control when the non-running mode is selected by the select switch, the releasing control supplying the OFF pressure to the release-side oil chamber so as to set the lock mechanism to the unlocked state and then decreasing the hydraulic pressure of the release-side oil chamber, wherein
in a case where the control unit determines to control the friction element to become the released state when the running mode is selected, the control unit starts supplying the OFF pressure to the release-side oil chamber to cause the unlocked state of the lock mechanism, and
after the lock mechanism becomes the unlocked state, the control unit starts supplying the hydraulic pressure to the engaging-side oil chamber and reduces the hydraulic pressure of the release-side oil chamber.

2. The automatic transmission according to claim 1, wherein
after the control unit starts supplying the OFF pressure to the release-side oil chamber, the control unit detects the unlocked state of the lock mechanism based on a change in actual hydraulic pressure of the release-side oil chamber, and
after the control unit detects the unlocked state of the lock mechanism, the control unit starts supplying the hydraulic pressure to the engaging-side oil chamber and reduces the hydraulic pressure of the release-side oil chamber.

3. The automatic transmission according to claim 1 or 2, wherein after the lock mechanism becomes the unlocked state, when acceleration or restart is requested, the control unit increases the hydraulic pressure of the engaging-side oil chamber.

4. A control method for an automatic transmission, the automatic transmission including:
a friction element that is arranged in a power transmission path, and that is adapted to:
become a engaged state by supply of an ON pressure to a engaging-side oil chamber while a lock mechanism becomes a locked state, and maintain the engaged state when the lock mechanism becomes the locked state when the hydraulic pressure of the engaging-side oil chamber decreases; and
become a released state by supply of an OFF pressure to a release-side oil chamber when the lock mechanism is in the locked state while the lock mechanism becomes an unlocked state, and maintain the released state when the lock mechanism becomes the unlocked state when the hydraulic pressure of the release-side oil chamber decreases; and
a select switch adapted to allow selecting a running mode or a non-running mode as a transmission mode, the control method comprising:
performing a engaging control when the running mode is selected by the select switch, the engaging control supplying the ON pressure to the engaging-side oil chamber so as to set the lock mechanism to the locked state and then decreasing the hydraulic pressure of the engaging-side oil chamber; and
performing a releasing control when the non-running mode is selected by the select switch, the releasing control supplying the OFF pressure to the release-side oil chamber so as to set the lock mechanism to the unlocked state and then decreasing the hydraulic pressure of the release-side oil chamber, wherein
in a case where the control method determines to control the friction element to become the released state when the running mode is selected, the control method starts supplying the OFF pressure to the release-side oil chamber to cause the unlocked state of the lock mechanism, and
after the lock mechanism becomes the unlocked state, the control method starts supplying the hydraulic pressure to the engaging-side oil chamber and reduces the hydraulic pressure of the release-side oil chamber.
